(19)

Europäisches Patentamt

European Patent Office

Office européen des brevets

(11) **EP 4 503 459 A1**

(12) **EUROPEAN PATENT APPLICATION**
published in accordance with Art. 153(4) EPC

(43) Date of publication:
**05.02.2025 Bulletin 2025/06**

(21) Application number: **22934271.2**

(22) Date of filing: **31.03.2022**

(51) International Patent Classification (IPC):
**H04B 7/0456** (2017.01)   **H04L 27/32** (2006.01)

(52) Cooperative Patent Classification (CPC):
**H04B 7/0456; H04L 27/32**

(86) International application number:
**PCT/CN2022/084655**

(87) International publication number:
**WO 2023/184434 (05.10.2023 Gazette 2023/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100085 (CN)**

(72) Inventor: **GAO, Xueyuan**
**Beijing 100085 (CN)**

(74) Representative: **Dehns Germany Partnerschaft
mbB**
**Theresienstraße 6-8**
**80333 München (DE)**

(54) **CODEBOOK-BASED UPLINK CHANNEL SENDING METHOD AND APPARATUS**

(57)    The present application provides a codebook-based uplink channel sending method and an apparatus, and relates to the technical field of communications. The method comprises: determining a codebook set matching the number of antenna ports of a terminal device for sending an uplink channel, the maximum number of antenna ports of the uplink channel being 8 (201); receiving indication information sent by a network device (202); according to the indication information, determining a corresponding precoding matrix from the codebook set (203); precoding the uplink channel by using the precoding matrix (204); and sending the precoded uplink data channel to the corresponding network device (205). Codebook-based uplink transmission may realize spatial multiplexing, thus effectively increasing the uplink channel transmission rate, and improving communication efficiency.

determining a codebook set matching the a number of antenna ports of the terminal for an uplink channel transmission, the a maximum number of antenna ports of the uplink channel is 8 — 201

receiving indication information sent by a network device — 202

determining a corresponding precoding matrix from the codebook set according to the indication information — 203

precoding the uplink channel by using the precoding matrix, the uplink channel supporting at most 8-layer codebook-based uplink data transmission — 204

sending a pre-coded uplink data channel to the network device — 205

**Fig. 2**

EP 4 503 459 A1

**Description**

**TECHNICAL FIELD**

The present disclosure relates to the technical field of communications, and in particular to a codebook-based uplink channel transmission method and apparatus.

**BACKGROUND**

In the 5G (5th Generation Mobile Communication Technology) NR (New Radio) system, a codebook-based uplink transmission method is a transmission method of a spatial multiplexing for determining an uplink channel precoding based on a fixed codebook, and is a common transmission method.

At present, the protocol only supports at most 4-layer uplink transmission, and can support at most 8-layer downlink transmission. In order to further increase the transmission rate, the number of uplink sending antennas can be considered to be increased to at most 8 antennas to support a higher uplink transmission rate comparable to the downlink transmission.

**SUMMARY**

An embodiment of a first aspect of the present disclosure provides a codebook-based uplink channel transmission method, which is performed by a terminal and includes:

determining a codebook set matching a number of antenna ports of the terminal for an uplink channel transmission, in which a maximum number of antenna ports of the uplink channel is 8;
receiving indication information sent by a network device;
determining a corresponding precoding matrix from the codebook set according to the indication information;
precoding the uplink channel by using the precoding matrix, the uplink channel supporting at most 8-layer codebook-based uplink data transmission; and
sending a pre-coded uplink data channel to the network device.

Optionally, the codebook set is one of the following:

the codebook set including at least one precoding matrix, in which each precoding matrix has a same rank;
the codebook set including at least two precoding matrices, in which the at least two precoding matrices have at least two ranks; and
the codebook set including a plurality of precoding matrices, in which the plurality of precoding matrices have eight ranks.

Optionally, the indication information includes a transmission precoding matrix indicator (TPMI) and/or a sounding reference signal (SRS) resource index SRI.

Optionally, determining the codebook of the terminal includes:

predefining an antenna array configuration;
determining codebook configuration parameters according to the antenna array configuration;
generating a precoding matrix set for a full coherent transmission according to the codebook configuration parameters; and
determining at least one precoding matrix from the precoding matrix set as a codeword for the full coherent transmission in the codebook.

Optionally, the codebook further includes at least one precoding matrix for an incoherent transmission and at least one precoding matrix for a partial coherent transmission determined according to an antenna correlation classification of the terminal.

Optionally, antennas of the terminal are a single-front antenna array, and the antenna array configuration is configured to indicate array arrangement information of the single-front antenna array.

Optionally, antennas of the terminal are a multi-front antenna array, and the antenna array configuration is configured to indicate array arrangement information of the single-front antenna array obtained from a combination of multiple fronts of the multi-front antenna array.

Optionally, antennas of the terminal are a multi-front antenna array;

the antenna array configuration includes array arrangement information of each single-front antenna array in the multi-front antenna array, in which the array arrangement information of each single-front antenna array is configured to determine a precoding matrix set corresponding to each single-front antenna array, and determine a codebook of each single-front antenna array from the precoding matrix set corresponding to each single-front antenna array.

Optionally, the method further includes:

obtaining a compensation merging factor set among a plurality of fronts in the multi-front antenna array;
determining a multi-front antenna array codebook according to the compensation merging factor and the codebook of each single-front antenna array.

Optionally, the indication information includes the transmission precoding matrix indicator (TPMI) and the sounding reference signal resource index (SRI), and determining a corresponding precoding matrix from the codebook set according to the indication information includes:

determining a transmission rank indication (TRI) of the terminal according to the SRI;
determining the precoding matrix according to the TRI and the TPMI.

Optionally, generating a precoding matrix set for a full coherent transmission according to the codebook configuration parameters includes:
generating the precoding matrix set for the full coherent transmission based on a constant modulus DFT vector according to the codebook configuration parameters.

An embodiment of a second aspect of the present disclosure provides a codebook-based uplink channel transmission method, which is performed by a network device and includes:

sending indication information to a terminal;
in which the indication information is configured to determine a corresponding precoding matrix from a codebook set matching a number of antenna ports of the terminal for an uplink channel transmission, a maximum number of antenna ports of the uplink channel is 8, and the uplink channel supports at most 8-layer codebook-based uplink data transmission;
receiving a pre-coded uplink data channel processed by the precoding matrix and sent by the terminal.

Optionally, the codebook set is one of the following:

the codebook set including at least one precoding matrix, in which each precoding matrix has a same rank;
the codebook set including at least two precoding matrices, in which the at least two precoding matrices have at least two ranks; and
the codebook set including a plurality of precoding matrices, in which the plurality of precoding matrices have eight ranks.

Optionally, the indication information includes a transmission precoding matrix indicator (TPMI) and/or a sounding reference signal (SRS) resource index SRI.
Optionally, the indication information includes a transmission precoding matrix indicator (TPMI) and a sounding reference signal resource index (SRI), in which the SRI is configured to determine a transmission rank indication (TRI) of the terminal, and the TRI and the TPMI are configured to determine the precoding matrix.
An embodiment of a third aspect of the present disclosure provides a codebook-based uplink channel transmission apparatus, which is applied to a terminal, and includes:

a processing unit configured to determine a codebook set matching a number of antenna ports of the terminal for an uplink channel transmission, in which a maximum number of antenna ports of the uplink channel is 8;
a transceiving unit configured to receive indication information sent by a network device;
in which the processing unit is configured to determine a corresponding precoding matrix from the codebook set according to the indication information;
the processing unit is configured to precode the uplink channel by using the precoding matrix and the uplink channel supports at most 8-layer codebook-based uplink data transmission; and
the transceiving unit is configured to send a pre-coded uplink data channel to the network device.

Optionally, the codebook set is one of the following:

the codebook set including at least one precoding matrix, in which each precoding matrix has a same rank;
the codebook set including at least two precoding matrices, in which the at least two precoding matrices have at least two ranks; and
the codebook set including a plurality of precoding matrices, in which the plurality of precoding matrices have eight ranks.

Optionally, the indication information includes a transmission precoding matrix indicator (TPMI) and/or a sounding reference signal (SRS) resource index SRI.

Optionally, the processing unit is specifically configured to:

predefine an antenna array configuration;
determine codebook configuration parameters according to the antenna array configuration;
generate a precoding matrix set for a full coherent transmission according to the codebook configuration parameters; and
determine at least one precoding matrix from the precoding matrix set as a codeword for the full coherent transmission in the codebook.

Optionally, the codebook includes at least one precoding matrix for an incoherent transmission and at least one precoding matrix for a partial coherent transmission determined according to an antenna correlation classification of the terminal.

Optionally, antennas of the terminal are a single-front antenna array, and the antenna array configuration is configured to indicate array arrangement information of the single-front antenna array

Optionally, antennas of the terminal are a multi-front antenna array, and the antenna array configuration is configured to indicate array arrangement information of the single-front antenna array obtained from a combination of multiple fronts of the multi-front antenna array.

Optionally, antennas of the terminal are a multi-front antenna array;
the antenna array configuration includes array arrangement information of each single-front antenna array in the multi-front antenna array, in which the array arrangement information of each single-front antenna array is configured to determine a precoding matrix set corresponding to each single-front antenna array, and determine a codebook of each single-front antenna array from the precoding matrix set corresponding to each single-front antenna array.

Optionally, the processing unit is also configured to:

obtain a compensation merging factor set among a plurality of fronts in the multi-front antenna array;
determine a multi-front antenna array codebook according to the compensation merging factor and the codebook of each single-front antenna array.

Optionally, the indication information includes the transmission precoding matrix indicator (TPMI) and the sounding reference signal resource index (SRI), and determining a corresponding precoding matrix from the codebook set according to the indication information includes:

determining a transmission rank indication (TRI) of the terminal according to the SRI;
determining the precoding matrix according to the TRI and the TPMI.

Optionally, the processing unit is specifically configured to:
generate the precoding matrix set for the full coherent transmission based on a constant modulus DFT vector according to the codebook configuration parameters.

An embodiment of a fourth aspect of the present disclosure provides a codebook-based uplink channel transmission apparatus, which is applied to a network device, and includes:

a transceiving unit configured to send indication information to a terminal;
in which the indication information is configured to determine a corresponding precoding matrix from a codebook set matching a number of antenna ports of the terminal for an uplink channel transmission, a maximum number of antenna ports of the uplink channel is 8, and the uplink channel supports at most 8-layer codebook-based uplink data transmission;
in which the transceiving unit is configured to receive a pre-coded uplink data channel processed by the precoding matrix and sent by the terminal.

Optionally, the codebook set is one of the following:

the codebook set including at least one precoding matrix, in which each precoding matrix has a same rank;

the codebook set including at least two precoding matrices, in which the at least two precoding matrices have at least two ranks; and

the codebook set including a plurality of precoding matrices, in which the plurality of precoding matrices have eight ranks.

Optionally, the indication information includes a transmission precoding matrix indicator (TPMI) and/or a sounding reference signal (SRS) resource index SRI.

Optionally, the indication information includes the transmission precoding matrix indicator (TPMI) and the sounding reference signal (SRS) resource index SRI, in which the SRI is configured to determine a transmission rank indication (TRI) of the terminal, and the TRI and the TPMI are configured to determine the precoding matrix.

An embodiment of a fifth aspect of the present disclosure provides a communication apparatus including a processor and a memory; the memory stores a computer program; and the processor executes the computer program stored in the memory to enable the apparatus to perform the codebook-based uplink channel transmission method in the above embodiment of the first aspect.

An embodiment of the sixth aspect of the present disclosure provides a communication apparatus including a processor and a memory; the memory stores a computer program; and the processor executes the computer program stored in the memory to enable the apparatus to perform the codebook-based uplink channel transmission method in the above embodiment of the second aspect.

An embodiment of the seventh aspect of the present disclosure provides a communication apparatus including a processor and an interface circuit; the interface circuit is configured to receive and transmitting code instructions to the processor; and the processor is configured to run the code instructions to enable the apparatus to perform the codebook-based uplink channel transmission method in the above embodiment of the first aspect.

An embodiment of an eighth aspect of the present disclosure provides a communication apparatus including a processor and an interface circuit; the interface circuit is configured to receive and transmit code instructions to the processor; and the processor is configured to run the code instructions to enable the apparatus to perform the codebook-based uplink channel transmission method in the above embodiment of the second aspect.

An embodiment of a ninth aspect the present disclosure provides a computer-readable storage medium configured to store instructions, and when the instructions are executed, the codebook-based uplink channel transmission method in the above embodiment of the first aspect is realized.

An embodiment of a tenth aspect of the present disclosure provides a computer-readable storage medium configured to store instructions, and when the instructions are executed, the codebook-based uplink channel transmission method in the above embodiment of the second aspect is realized.

An embodiment of an eleventh aspect of the present disclosure proposes a computer program that, when run on a computer, enables the computer to perform the codebook-based uplink channel transmission method in the embodiment of the first aspect.

An embodiment of a twelfth aspect of the present disclosure proposes a computer program that, when run on a computer, enables the computer to perform the codebook-based uplink channel transmission method in the embodiment of the second aspect.

According to the codebook-based uplink channel transmission method and apparatus provided by the embodiments of the present disclosure, the codebook set matching the number of antenna ports of the terminal for an uplink channel transmission is determined. The maximum number of antenna ports of the uplink channel is 8. The indication information sent by the network device is received and the corresponding precoding matrix is determined from the codebook set according to the indication information. The uplink channel is pre-coded by using the precoding matrix. The uplink channel supports at most 8-layer codebook-based uplink data transmission. The pre-coded uplink data channel is sent to the network device. The codebook-based uplink transmission may realize a spatial multiplexing, and thus effectively increasing an uplink channel transmission rate, and improving a communication efficiency.

Additional aspects and advantages of the present disclosure will be partially provided in the following description. Parts will become apparent from the following description, or will be known through the practice of the present disclosure.

## BRIEF DESCRIPTION OF THE DRAWINGS

The above and/or additional aspects and advantages of the present disclosure will become apparent and easy to understand from the description of embodiments in combination with the following drawings, in which:

Fig. 1 is an architecture diagram of a communication system provided by an embodiment of the present disclosure;

Fig. 2 is a flow chart of a codebook-based uplink channel transmission method provided by an embodiment of the present disclosure;

Fig. 3 is a flow chart of another codebook-based uplink channel transmission method provided by an embodiment of the present disclosure;

Fig. 4a is a schematic diagram of an antenna arrangement of a terminal provided by an embodiment of the present disclosure;

Fig. 4b is a schematic diagram of an antenna arrangement of another terminal provided by an embodiment of the present disclosure;

Fig. 4c is a schematic diagram of an antenna arrangement of another terminal provided by an embodiment of the present disclosure;

Fig. 4d is a schematic diagram of beam groups provided by an embodiment of the present disclosure;

Fig. 5 is a flow chart of another codebook-based uplink channel transmission method provided by an embodiment of the present disclosure;

Fig. 6 is a flow chart of another codebook-based uplink channel transmission method provided by an embodiment of the present disclosure;

Fig. 7 is a flow chart of another codebook-based uplink channel transmission method provided by an embodiment of the present disclosure;

Fig. 8 is a structural schematic diagram of a codebook-based uplink channel transmission apparatus provided by the present disclosure;

Fig. 9 is a structural schematic diagram of a codebook-based uplink channel transmission apparatus provided by the present disclosure;

Fig. 10 is a structural schematic diagram of a codebook-based uplink channel transmission apparatus provided by the present disclosure; and

Fig. 11 is a structural schematic diagram of a chip provided by an embodiment of the present disclosure.

## DETAILED DESCRIPTION

Embodiments of the present disclosure will be described below in detail. Examples of the embodiments are shown in drawings. When the description below relates to drawings, the same numerals in different drawings represent the same or similar elements unless otherwise indicated. The implementation modes described in the following exemplary embodiments do not represent all implementation modes consistent with the embodiments of the present disclosure. On the contrary, they are merely examples of apparatuses and methods consistent with some aspects of the embodiments of the present disclosure as illustrated in the attached claims.

The terms used in the embodiments of the present disclosure are merely for the purpose of describing specific embodiments and are not intended to limit the embodiments of the present disclosure. The terms "a" and "the" in the singular form used in the embodiments of the present disclosure and the appended claims are also intended to include the plural form, unless other meanings are clearly indicated in the context. It should also be understood that the term "and/or" used herein refers to and includes any or all possible combinations of one or more associated listed items.

It should be understood that although the terms first, second, third, etc. may be used in the embodiments of the present disclosure to describe various types of information, such information should not be limited to these terms. These terms are used only to distinguish the same type of information from one another. For example, the first information may also be referred to as the second information, and similarly, the second information may also be referred to as the first information, without departing the scope of the embodiments of the present disclosure. Depending on the context, the words "if' and "in case" used herein can be interpreted as "when" or "while" or "in response to certain".

The embodiments of the present disclosure will be described below in detail. Examples of the embodiments are shown in drawings, in which same or similar reference signs refer to same or similar elements from beginning to end. The embodiments described below by reference to the drawings are exemplary embodiments, and are used for explaining the present disclosure, and shall not be understood as a limitation to the present disclosure.

To better understand a codebook-based uplink channel transmission method disclosed by the embodiments of the present disclosure, a communication system applicable to the embodiments of the present disclosure is firstly described.

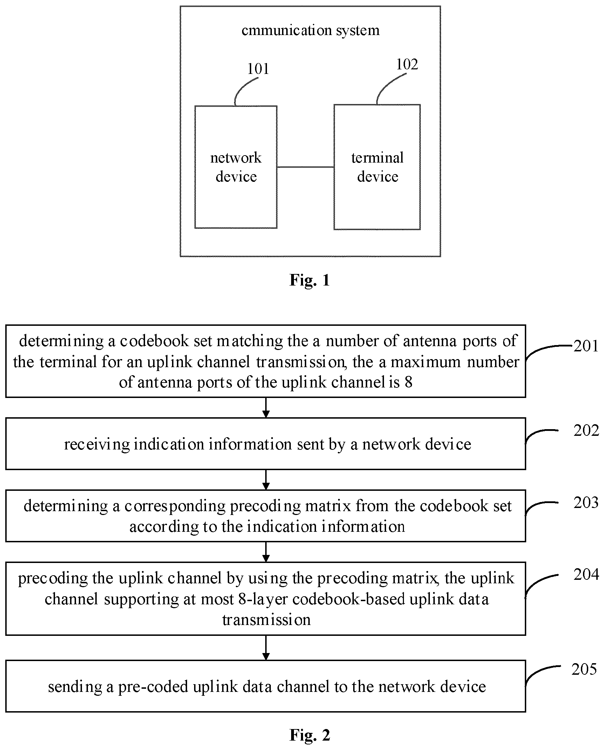

Referring to Fig. 1, Fig. 1 is an architecture diagram of a communication system provided by an embodiment of the present disclosure. The communication system may include, but is not limited to, one network device and one terminal. The number and shape of the devices shown in Fig. 1 are for example only and do not constitute a limitation to the embodiments of the present disclosure. In practical application, two or more network devices and two or more terminals may be included. The communication system shown in Fig. 1 includes one network device 101 and one terminal 102 as an example.

It should be noted that the technical solution of the embodiments of the present disclosure can be applied to various communication systems, e.g., long term evolution (LTE) system, fifth generation mobile communication system, 5G new air interface system, or other future novel mobile communication systems.

The network device 101 in the embodiments of the present disclosure is an entity for transmitting or receiving signals on a network side. For example, the network device 101 can be evolved NodeB (eNB), transmission reception point (TRP), next generation NodeB (gNR) in an NR system, base stations in other future mobile communication systems, or access nodes in wireless fidelity (WiFi) systems. The embodiments of the present disclosure do not limit the specific technology and the specific device form used by the network device. The network device provided by the embodiments of the present disclosure can be composed of a central unit (CU) and a distributed unit (DU), in which the CU can also be called a control unit. The structure of CU-DU can be used to separate the network device, such as protocol layers of the base station. The functions of part of the protocol layers are centrally controlled by the CU, and the functions of the remaining part or all of the protocol layers are distributed in the DU and centrally controlled by the CU.

The terminal 102 in the embodiments of the present disclosure is an entity for receiving or transmitting signals on a user side, such as a mobile phone. The terminal can also be called as a terminal, user equipment (UE), mobile station (MS), mobile terminal (MT), etc. The terminal can be a car with communication functions, a smart car, a mobile phone, a wearable device, a pad, a computer with wireless transceiving functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and the specific device form used by the terminal.

In the 5G (5th generation mobile communication technology) NR (New Radio) system, the codebook-based uplink transmission method is a transmission method for determining a spatial multiplexing of the uplink channel precoding based on a fixed codebook, and is a common transmission method.

In the codebook-based transmission of the physical uplink shared channel (PUSCH) in the NR, the terminal needs to be configured with at most one sounding reference signal (SRS) resource set for the codebook-based uplink transmission. The SRS resource set can be configured with multiple ($N_{SRS}$) SRS resources. The network side will feed back the SRS resource index (SRI) with $\log_2(N_{SRS})$ bits. The SRS resources can be selected via the SRI index. Similarly, the network device finally determines the transmission precoding matrix indicator (TPMI) and the rank indicator (RI) used by the terminal for the transmission based on uplink CSI (channel state information), and informs the terminal. The terminal pre-codes the data in the subsequent uplink transmission by a precoding matrix specified by the network device, and maps the pre-coded data to the corresponding antenna ports according to the spatial filter SpatialRelationInfo corresponding to the SRS resource of the SRI index. Different SRSs are transmitted by using different spatial filters, so the data pre-coded by the terminal needs to be filtered by the spatial filter used by the SRS of the SRI index. In this way, the uplink data transmission from a single layer to a full rank can be supported.

At present, the protocol only supports at most 4-layer uplink transmission, and can support at most 8-layer downlink transmission. In order to further increase the transmission rate, the number of uplink sending antennas can be considered to be increased to at most 8 antennas to support a higher uplink transmission rate comparable to the downlink transmission.

To support an uplink 8-antenna (8Tx) codebook-based PUSCH transmission, it is necessary to consider how to determine the corresponding uplink 8-port codebook.

In the embodiments of the present disclosure, a codebook set matching the number of antenna ports of the terminal for an uplink channel transmission is determined, and the maximum number of antenna ports of the uplink channel is 8. The indication information sent by the network device is received and the corresponding precoding matrix is determined from the codebook set according to the indication information. The uplink channel is pre-coded by using the precoding matrix. The uplink channel supports at most 8-layer codebook-based uplink data transmission. The uplink data channel pre-coded is sent to the network device. The codebook-based uplink transmission may realize a spatial multiplexing, and thus effectively increasing an uplink channel transmission rate, and improving a communication efficiency.

It can be understood that the communication system described in the embodiments of the present disclosure is to more clearly explain the technical solution of the embodiments of the present disclosure, and does not constitute a limitation to the technical solution provided by the embodiments of the present disclosure. Those ordinary skilled in the art know that with the evolution of the system architecture and the emergence of new business scenarios, the technical solution provided by the embodiments of the present disclosure is applicable to similar technical problems.

The codebook-based uplink channel transmission method and apparatus provided by the present disclosure are introduced in detail below in combination with the drawings.

Fig. 2 is a flow chart of a codebook-based uplink channel transmission method provided by an embodiment of the present disclosure. It should be noted that the method in the embodiment of the present disclosure is performed by the terminal. As shown in Fig. 2, the codebook-based uplink channel transmission method includes the following steps.

In step 201, a codebook set matching a number of antenna ports of a terminal for an uplink channel transmission is determined, and a maximum number of antenna ports of the uplink channel is 8.

The terminal determines the codebook set matching the number of own antenna ports. For example, the number of the antenna ports of the uplink channel sent by the terminal is 8, which can support at most 8-layer codebook-based uplink transmission. The terminal can determine the codebook set matching the number of its own antenna ports, that is, a 8-port codebook set.

The codebook set includes at least one precoding matrix. The codebook set can be one of the following:

in at least one precoding matrix included in the codebook set, each precoding matrix has a same rank;
at least two precoding matrices included in the codebook set have at least two ranks;
a plurality of precoding matrices included in the codebook set have eight ranks.

That is, as a first possible embodiment, the rank of each precoding matrix in the codebook set is the same, and the precoding matrices of different ranks will be in different codebook sets.

As a second possible embodiment, a plurality of precoding matrices included in the codebook set have at least two ranks, and the precoding matrices of different ranks can be in a same codebook set.

As a third possible embodiment, a plurality of precoding matrices included in the codebook set have eight ranks, that is, if the terminal is an 8Tx terminal, the precoding matrices of ranks 1 to 8 all exist in the codebook set.

In some embodiments, the codebook set can be represented by one or more codebook tables.

As an example, in the first embodiment, different codebook sets of ranks 1 to 8 correspond to different codebook tables respectively. For example, a codebook set of rank 1 corresponds to table 1, a codebook set of rank 2 corresponds to table 2, and so on. In this example, the indication information can also include the transmission rank indicator (TRI), and the terminal determines the ranks according to the TRI and thus determines the table to be used.

In the embodiments of the present disclosure, at least one precoding matrix in the codebook set may be determined by using a two-level codebook structure.

In step 202, the indication information sent by the network device is received.

The terminal can receive the indication information sent by the network device, and determine a precoding matrix indicated by the indication information from the codebook set according to the indication information for the precoding of the uplink channel of the terminal.

The indication information may include a transmission precoding matrix indicator (TPMI) and/or a sounding reference signal (SRS) resource index (SRI).

That is, optionally, the terminal can determine the corresponding precoding matrix from the codebook set according to the TPMI sent by the network device, or determine the corresponding precoding matrix from the codebook set according to the TPMI and the SRI sent by the network device.

In step 203, a corresponding precoding matrix is determined from the codebook set according to the indication information.

The terminal can determine the corresponding precoding matrix from the determined codebook set according to the indication information sent by the network device.

In some embodiments, the indication information includes the TPMI. The terminal can determine the corresponding precoding matrix from the codebook set according to the TPMI.

In at least one precoding matrix included in the codebook set, each precoding matrix has the same rank. The indication information can indicate the TPMI, and the terminal can determine the precoding matrix corresponding to the TPMI from the codebook set according to the TPMI.

A plurality of precoding matrices included in the codebook set have at least two ranks, or a plurality of precoding matrices included in the codebook set have eight ranks. The indication indication can indicate TPMI and RI. For example, the codebook set includes a precoding matrix of rank 1 and a precoding matrix of rank 2, in which index 0-m is a precoding matrix of rank 1 and index s-n is a precoding matrix of rank 2; and then the TPMI can indicate both the RI and the TPMI.

In some embodiments, the indication information includes the TPMI and the SRI. The terminal can determine the corresponding precoding matrix from the codebook set according to the TPMI and the SRI. The terminal can determine the transmission rank indicator (TRI) of the terminal according to the SRI, and then determine the corresponding precoding matrix from the codebook set according to the determined TRI and the TPMI.

In step 204, the uplink channel is pre-coded by using the precoding matrix, the uplink channel supporting at most 8-layer codebook-based uplink data transmission.

The terminal can pre-code the uplink channel by using the determined precoding matrix to complete the uplink channel transmission, in which the uplink channel supports at most 8-layer codebook-based uplink data transmission.

In step 205, a pre-coded uplink data channel is sent to the network device.

The terminal can map the pre-coded data to the corresponding antenna ports and send the pre-coded uplink data channel to the network device.

In the embodiment of the present disclosure, the uplink channel may be the physical uplink shared channel (PUSCH).

To sum up, the codebook set matching the number of antenna ports of the terminal for an uplink channel transmission is determined. The maximum number of antenna ports of the uplink channel is 8. The indication information sent by the network device is received and the corresponding precoding matrix is determined from the codebook set according to the indication information. The uplink channel is pre-coded by using the precoding matrix. The uplink channel supports at most 8-layer codebook-based uplink data transmission. The pre-coded uplink data channel is sent to the network device. The codebook-based uplink transmission may realize a spatial multiplexing, and thus effectively increasing an uplink channel transmission rate, and improving a communication efficiency.

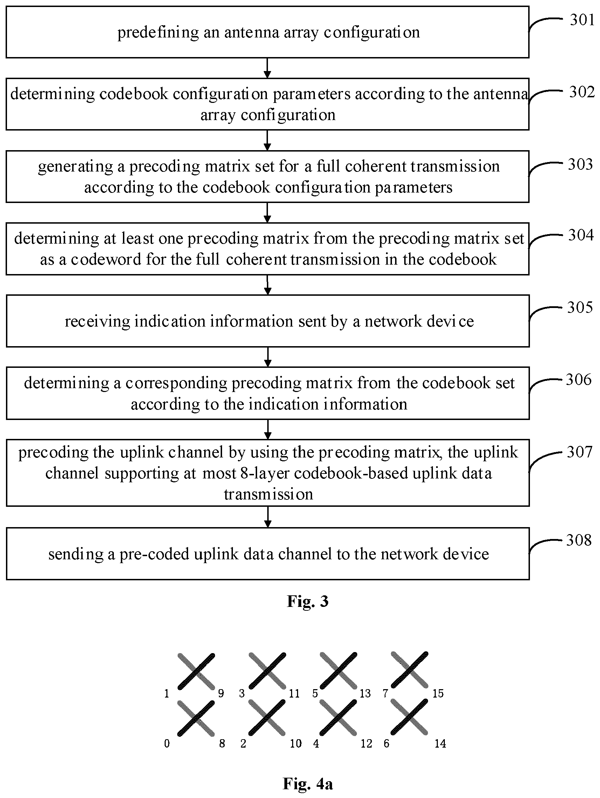

The embodiment of the present disclosure provides another codebook-based uplink channel transmission method. Fig. 3 is a flow chart of another codebook-based uplink channel transmission method provided by an embodiment of the present disclosure. The method can be performed by the terminal. The codebook-based uplink channel transmission method can be performed separately, or performed in conjunction with any of the embodiments in the present disclosure or possible realization modes in the embodiments, or performed in conjunction with any of the technical solutions in the relevant technologies. As shown in Fig. 3, the codebook-based uplink channel transmission method can include the following steps,

In step 301, an antenna array configuration is predefined.

In the embodiments of the present disclosure, the terminal needs to determine the antenna array configuration, in which the antenna array configuration is configured to indicate array arrangement information of the antenna array of the terminal.

Optionally, the antennas of the terminal may be a single-front antenna array or a multi-front antenna array.

In some embodiments, the antennas of the terminal are the single-front antenna array, and the antenna array configuration is configured to indicate the array arrangement information of the single-front antenna array.

In some embodiments, the antennas of the terminal are the multi-front antenna array, and the antenna array configuration is configured to indicate the array arrangement information of the single-front antenna array obtained from the combination of multiple fronts of the multi-front antenna array, that is, capable of indicating the arrangement information of a single-front antenna array obtained by combining multiple fronts in the multi-front antenna array.

In the embodiments of the present disclosure, the arrangement information of the antenna array refers to the way the antennas of the terminal are arranged, including the dimensions of the arrangement, the number of the antenna ports in each dimension, etc.

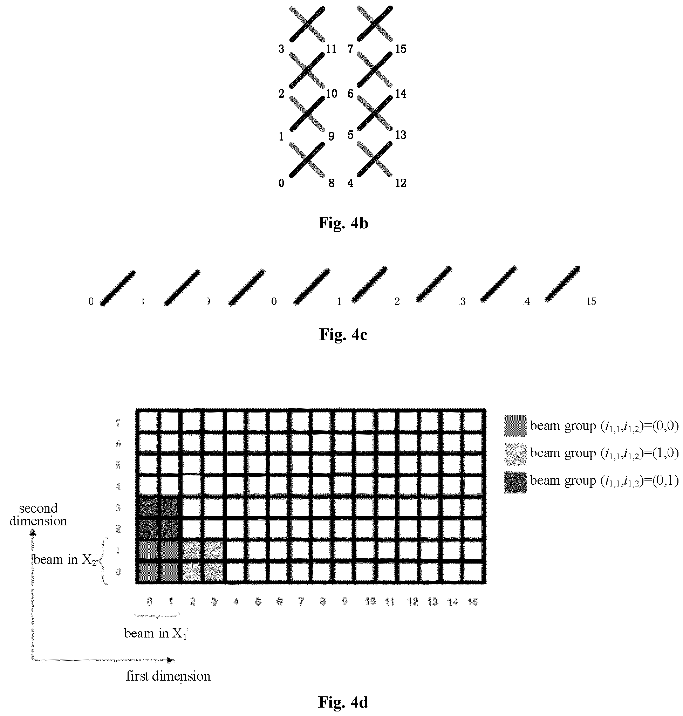

As a possible example, the arrangement mode of a 16-port antenna array can be shown in Fig. 4a, Fig. 4b and Fig. 4c. Fig. 4a is a schematic diagram of antenna arrangement of a terminal provided by an embodiment of the present disclosure. Fig. 4b is a schematic diagram of antenna arrangement of another terminal provided by an embodiment of the present disclosure. Fig. 4c is a schematic diagram of antenna arrangement of another terminal provided by an embodiment of the present disclosure.

As shown in Fig. 4a, the arrangement information of the single-front antenna array is as follows: the number of the antenna ports in the first dimension (horizontal dimension in the figure) in the same polarization direction is 4, and the number of the antenna ports in the second dimension (vertical dimension in the figure) in the same polarization direction is 2.

As shown in Fig. 4b, the arrangement information of the single-array antenna array is as follows: the number of antenna ports in the first dimension (horizontal dimension in the figure) in the same polarization direction is 2, and the number of antenna ports in the second dimension (vertical dimension in the figure) in the same polarization direction is 4.

As shown in Fig. 4c, the arrangement information of the single-front antenna array is as follows: the number of the antenna ports in the first dimension (horizontal dimension in the figure) in the same polarization direction is 8, and the number of the antenna ports in the second dimension (vertical dimension in the figure) in the same polarization direction is 1, that is, the antennas are arranged in one dimension.

In the embodiments of the present disclosure, the terminal can determine the codebook configuration parameters required to generate at least one precoding matrix in the codebook set according to the arrangement information of the antenna array.

In step 302, the codebook configuration parameters are determined according to the antenna array configuration.

In the embodiments of the present disclosure, the bipolar codebook structure $W = W_1W_2$ of a parameterized codebook is used to generate at least one precoding matrix in the codebook set. $W_1$ describes the long-term broadband characteristics of the channel; and $W_2$ describes the short-term subband characteristics of the channel, and is used for column selection and phase adjustment of the beam in $W_1$.

The first-level codebook $W_1$ is based on a block diagonal structure, and each diagonal block represents a beam group in a polarization direction, which is obtained by a calculation of Kronecker product of the first-dimensional beam group and the second-dimensional beam group.

$$\mathbf{W}_1 = \begin{bmatrix} \mathbf{B} & 0 \\ 0 & \mathbf{B} \end{bmatrix} = \begin{bmatrix} \mathbf{X}_1^{i_{1,1}} \otimes \mathbf{X}_2^{i_{1,2}} & 0 \\ 0 & \mathbf{X}_1^{i_{1,1}} \otimes \mathbf{X}_2^{i_{1,2}} \end{bmatrix},$$

where $i_{1,1}$ represents the index of the first-dimensional beam group $\mathbf{X}_1$, and $i_{1,2}$ represents the index of the second-dimensional beam group $\mathbf{X}_2$. $\mathbf{X}_1$ is an $N_1 \times L_1$-dimensional matrix composed of $L_1$ DFT vectors with a length of $N_1$. Each vector is oversampled by $O_1$ times and expressed as:

$$\mathbf{v}_{m_1} = \begin{bmatrix} 1 & e^{j\frac{2\pi m_1}{N_1 O_1}} & \ldots & e^{j\frac{2\pi(N_1-1)m_1}{N_1 O_1}} \end{bmatrix}^T.$$

$N_1$ represents the number of the antenna ports in the first dimension in the same polarization direction. As an example, as shown in Fig. 4a, the number of the antenna ports in the first dimension of the single-front antenna array in the same polarization direction is 4, and the parameter $N_1 = 4$ is determined. As shown in Fig. 4b, the number of the antenna ports in the first dimension of the single-front antenna array in the same polarization direction is 2, and the parameter $N_1 = 2$ is determined. As shown in Fig. 4c, the number of the antenna ports in the first dimension of the single-front antenna array in the same polarization direction is 8, and the parameter $N_1 = 8$ is determined.

$\mathbf{X}_2$ is an $N_2 \times L_2$-dimensional matrix composed of $L_2$ DFT vectors with a length of $N_2$. Each vector is oversampled by $O_2$ times and expressed as:

$$\mathbf{u}_{m_2} = \begin{bmatrix} 1 & e^{j\frac{2\pi m_2}{N_2 O_2}} & \ldots & e^{j\frac{2\pi(N_2-1)m_2}{N_2 O_2}} \end{bmatrix}^T.$$

$N_2$ represents the number of the antenna ports in the second dimension in the same polarization direction. As an example, as shown in Fig. 4a, the number of the antenna ports in the second dimension of the single-front antenna array in the same polarization direction is 2, and the parameter $N_2 = 2$ is determined. As shown in Fig. 4b, the number of the antenna ports in the second dimension of the single-front antenna array in the same polarization direction is 4, and the parameter $N_2 = 4$ is determined. As shown in Fig. 4c, the number of the antenna ports in the second dimension of the single-front antenna array in the same polarization direction is 1, and the parameter $N_2 = 1$ is determined.

In this way, $\mathbf{X}_1^{i_{1,1}}$ and $\mathbf{X}_2^{i_{1,2}}$ can be expressed as:

$$\mathbf{X}_1^{i_{1,1}} = \begin{bmatrix} \mathbf{V}_{s_1 \cdot i_{1,1} + 0 \cdot p_1} & \mathbf{V}_{s_1 \cdot i_{1,1} + 1 \cdot p_1} & \cdots & \mathbf{V}_{s_1 \cdot i_{1,1} + (L_1-1) \cdot p_1} \end{bmatrix};$$

$$\mathbf{X}_2^{i_{1,2}} = \begin{bmatrix} \mathbf{u}_{s_2 \cdot i_{1,2} + 0 \cdot p_2} & \mathbf{u}_{s_2 \cdot i_{1,2} + 1 \cdot p_2} & \cdots & \mathbf{u}_{s_2 \cdot i_{1,2} + (L_2-1) \cdot p_2} \end{bmatrix}.$$

$(s_1, s_2)$ is defined as the beam group interval of the first dimension and the second dimension, and represents the difference between the indexes of the first beam in two adjacent beam groups. $(p_1, p_2)$ is defined as the beam interval in the beam group, and represents the interval of adjacent beams in $\mathbf{X}_1$ and $\mathbf{X}_2$. Fig. 4d is a schematic diagram of beam groups provided by an embodiment of the present disclosure, and Fig. 4d provides the schematic diagram of beam groups of $(L_1, L_2) = (2,2)$, $(s_1, s_2) = (2,2)$ and $(p_1, p_2) = (1,1)$.

As mentioned above, it is understood that the antenna ports $(N_1, N_2)$ can be determined according to the arrangement information of the antenna array of the terminal. The codebook supports examples of combinations of the antenna ports $(N_1, N_2)$ and oversampling factors $(O_1, O_2)$ as shown in Table 1 below. In the embodiments of the present disclosure, the codebook configuration parameters may be determined based on similar antenna configuration, but not limited to this.

Table 1 Codebook Configuration Parameters

| Number of SRS ports | $(N_1, N_2)$ | $(O_1, O_2)$ |
|---|---|---|
| 4 | (2,1) | (4,-) |
| 8 | (2,2) | (4,4) |
| | (4,1) | (4,-) |

According to the antenna array configuration of the terminal, the codebook configuration parameters $N_1$, $N_2$, $O_1$ and $O_2$, the number of beams, beam patterns and the like can be determined.

In step 303, a precoding matrix set for a full coherent transmission is generated according to the codebook configuration parameters.

According to the codebook configuration parameters determined in step 302, the precoding matrix set for the full coherent transmission can be generated.

A diagonal block matrix **B** in the first-level codebook is composed of L oversampling two-dimensional DFT beams.

$$\mathbf{W}_1 = \begin{bmatrix} \mathbf{X}_1^{i_{1,1}} \otimes \mathbf{X}_2^{i_{1,2}} & 0 \\ 0 & \mathbf{X}_1^{i_{1,1}} \otimes \mathbf{X}_2^{i_{1,2}} \end{bmatrix} = \begin{bmatrix} \mathbf{B} & 0 \\ 0 & \mathbf{B} \end{bmatrix}, \ \mathbf{B} = \begin{bmatrix} \mathbf{b}_0 & \ldots & \mathbf{b}_{L-1} \end{bmatrix}, \ L = L_1 \times L_2.$$

For codebooks of rank 1 and rank 2 (Rank=1 and Rank=2), L can be configured as 1 or 4, corresponding to feedbacks of different precisions. For rank>2, L=1. The second-level codebook is used for beam selection (L>4) and phase adjustment.

The precoding matrix set with rank=1 can be expressed as:

$$\mathbf{W} = \frac{1}{\sqrt{2N_1 N_2}} \times \begin{bmatrix} \mathbf{W}_{0,0} \\ \mathbf{W}_{1,0} \end{bmatrix}, \ \mathbf{W}_{r,0} = \mathbf{b}_{k_1,k_2} \times c_{r,0}.$$

$\mathbf{b}_{k_1,k_2}$ is the oversampling two-dimensional DFT beam, corresponding to indexes $k_1$ and $k_2$, with a length of $N_1 N_2$; $c_{r,0}$ is a phase merging factor between two polarization directions; $c_{0,0} = 1$; $c_{1,0} \in \{1, -1, j, -j\}$; and r=0, 1, which indicates the polarization direction.

For the port configuration ($N_1$, $N_2$) and the oversampling factor ($O_1$, $O_2$), there are $N_1 O_1 N_2 O_2$ two-dimensional DFT beams. Beam indexes $k_1$ and $k_2$ are expressed as: $k_1 = s_1 \cdot i_{1,1} + p_1$ and $k_2 = s_2 \cdot i_{1,2} + p_2$ respectively.

The precoding matrix with rank=2 can be expressed as:

$$\mathbf{W} = \frac{1}{\sqrt{4N_1 N_2}} \times \begin{bmatrix} \mathbf{W}_{0,0} & \mathbf{W}_{0,1} \\ \mathbf{W}_{1,0} & \mathbf{W}_{1,1} \end{bmatrix}, \ \mathbf{W}_{r,l} = \mathbf{b}_{k_1+k'_{1,l}, k_2+k'_{2,l}} \times c_{r,l}.$$

*l*=0,1, indicates layer 1 and layer 2 respectively; $\mathbf{b}_{k_1+k'_{1,l}, k_2+k'_{2,l}}$ is the oversampling two-dimensional DFT beam with a length of $N_1 N_2$; $k_1$ and $k_2$ mean the same as that of the codebook of rank = 1; ( $k'_{1,l}$, $k'_{2,l}$ ) represents the selection of an orthogonal beam group; and $(k'_{1,0}, k'_{2,0}) = (0,0)$.

The codebooks of rank=3-4 are divided into two design modes according to the number of the ports: the codebook design below 16 ports based on LTE Class A, and the design mode of 16 ports and above by antenna port groups. An Intergroup phase adjustment is adopted between antenna groups, and an interpolarization phase adjustment is adopted between polarization directions. A wider beam can be obtained by means of port groups to achieve a better coverage. For rank=3, 4, the number of beams in the beam group is L=1. For below 16 ports, the orthogonal beam is selected to realize the interlayer orthogonality, and for 16 ports and above, the phase adjustment between groups and the phase adjustment between polarizations are used to realize the interlayer orthogonality.

The precoding matrix set of rank=3-4 can be expressed as:

$$\mathbf{W} = \frac{1}{\sqrt{2R N_1 N_2}} \times \begin{bmatrix} \mathbf{W}_{0,0} & \mathbf{W}_{0,1} & \ldots & \mathbf{W}_{0,R-1} \\ \mathbf{W}_{1,0} & \mathbf{W}_{1,1} & \ldots & \mathbf{W}_{1,R-1} \end{bmatrix}, \ R \in \{3,4\}.$$

The codebook of rank=5-8 is composed of a plurality of orthogonal beams. The codebook of rank =5-6 is formed by three orthogonal beams combined with corresponding phase adjustment factors, and the codebook of rank =7-8 shall be formed by four orthogonal beams combined with corresponding phase adjustment factors.

The precoding matrix set of rank=5-6 can be expressed as:

$$W = \frac{1}{\sqrt{2RN_1N_2}} \times \begin{bmatrix} W_{0,0} & W_{0,1} & \cdots & W_{0,R-1} \\ W_{1,0} & W_{1,1} & \cdots & W_{1,R-1} \end{bmatrix}, \ R \in \{3,4\}.$$

For the codebook of rank= 7-8, similar to the codebook of rank= 5-6, the codebook of rank= 7-8 ensures the interlayer orthogonality by four orthogonal beams.

The precoding matrix set of rank=7-8 can be expressed as:

$$W = \frac{1}{\sqrt{2RN_1N_2}} \times \begin{bmatrix} W_{0,0} & W_{0,1} & \cdots & W_{0,R-1} \\ W_{1,0} & W_{1,1} & \cdots & W_{1,R-1} \end{bmatrix}, \ R \in \{3,4\}.$$

In step 304, at least one precoding matrix is determined from the precoding matrix set as the codeword for the full coherent transmission in the codebook.

In the embodiments of the present disclosure, at least one precoding matrix is determined from the precoding matrix set generated in step 303 as a codeword for the full coherent transmission in the codebook set of the terminal. The codebook set may include at least one precoding matrix of at least one rank.

In some embodiments, the codebook set may also include at least one precoding matrix for an incoherent transmission and at least one precoding matrix for a partial coherent transmission determined according to the antenna correlation classification of the terminal.

The terminal may not calibrate each antenna port for the coherent transmission. The NR system defines three antenna coherent transmission capabilities: full coherent in which all antenna ports of the terminal can be subjected to the coherent transmission; partial coherent in which the antenna ports in the same coherent transmission group of the terminal can be subjected to the coherent transmission, and the antenna ports in different coherent transmission groups cannot be subjected to the coherent transmission; incoherent in which no antenna port of the terminal can be subjected to the coherent transmission.

In the embodiments of the present disclosure, at least one precoding matrix for the incoherent transmission and at least one precoding matrix for the partial coherent transmission are determined according to the antenna correlation classification of the terminal, that is, according to whether the coherent transmission can be carried out between the antenna ports in the terminal, and according to different antenna correlations of the terminal.

In step 305, the indication information sent by the network device is received.

In step 306, the corresponding precoding matrix is determined from the codebook set according to the indication information.

In step 307, the uplink channel is pre-coded by using the precoding matrix, the uplink channel supporting at most 8-layer codebook-based uplink data transmission.

In step 308, the pre-coded uplink data channel is sent to the network device.

In the embodiments of the present disclosure, step 305 to step 308 may be realized by any of the embodiments of the present disclosure respectively, which is not limited and not described in detail in the embodiments of the present disclosure.

To sum up, the codebook configuration parameters are determined via the predefined antenna array configuration and according to the antenna array configuration; the precoding matrix set for the full coherent transmission is generated according to the codebook configuration parameters; at least one precoding matrix is determined from the precoding matrix set as the codeword for the full coherent transmission in the codebook; the indication information sent by the network device is received; the corresponding precoding matrix is determined from the codebook set according to the indication information; the uplink channel is pre-coded by using the precoding matrix, and the uplink channel supports at most 8-layer codebook-based uplink data transmission; and the pre-coded uplink data channel is sent to the network device. The codebook-based uplink transmission may realize a spatial multiplexing, thus effectively increasing an uplink channel transmission rate, and improving a communication efficiency.

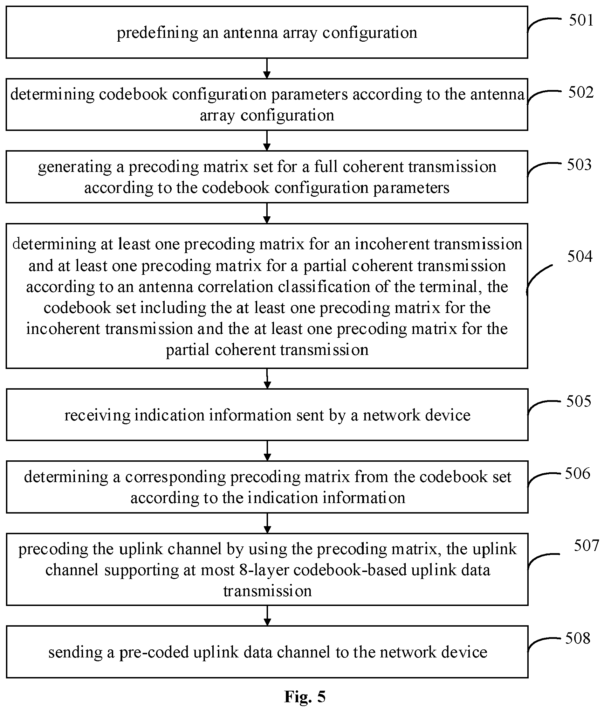

Fig. 5 is a flow chart of another codebook-based uplink channel transmission method provided by an embodiment of the present disclosure. The method can be performed by the terminal. The codebook-based uplink channel transmission method can be performed separately, or performed in conjunction with any of the embodiments in the present disclosure or possible realization modes in the embodiments, or performed in conjunction with any of the technical solutions in the relevant technologies. As shown in Fig. 5, the codebook-based uplink channel transmission method can include the following steps.

In step 501, an antenna array configuration is predefined.

In step 502, the codebook configuration parameters are determined according to the antenna array configuration.

In step 503, a precoding matrix set for a full coherent transmission is generated according to the codebook configuration parameters.

In the embodiments of the present disclosure, step 501 to step 503 may be realized by any of the embodiments of the present disclosure respectively, which is not limited and not described in detail in the embodiments of the present disclosure.

In step 504, at least one precoding matrix for an incoherent transmission and at least one precoding matrix for a partial coherent transmission are determined according to an antenna correlation classification of the terminal, the codebook set including the at least one precoding matrix for the incoherent transmission and the at least one precoding matrix for the partial coherent transmission.

In the embodiments of the present disclosure, at least one precoding matrix for the incoherent transmission and at least one precoding matrix for partial coherent transmission can be determined according to the antenna correlation classification of the terminal, that is, according to whether the coherent transmission can be carried out between the antenna ports in the terminal, and according to different antenna correlations of the terminal.

The terminal may not calibrate each antenna port for the coherent transmission. The NR system defines three antenna coherent transmission capabilities of the terminals.

Full coherent: all antenna ports of the terminal can be subjected to the coherent transmission.

Partial coherent: the antenna ports in the same coherent transmission group of the terminal can be subjected to the coherent transmission, and the antenna ports in different coherent transmission groups cannot be subjected to the coherent transmission.

Incoherent: no antenna port of the terminal can be subjected to the coherent transmission.

In some embodiments, optionally, the at least one precoding matrix for the incoherent transmission and the at least one precoding matrix for partial coherent transmission can be determined according to the correlation classification of the antenna ports based on the precoding matrix for the full coherent transmission, or the at least one precoding matrix for the incoherent transmission and the at least one precoding matrix for partial coherent transmission can be determined based on other methods, which are not limited here.

In the embodiments of the present disclosure, the codebook set may include the precoding matrix for the full coherent transmission, and may also include the at least one precoding matrix for the incoherent transmission and the at least one precoding matrix for the partial coherent transmission determined above to support the transmission of the uplink channel by the terminals with different coherent transmission capabilities.

In step 505, the indication information sent by the network device is received.

In step 506, the corresponding precoding matrix is determined from the codebook set according to the indication information.

In step 507, the uplink channel is pre-coded by using the precoding matrix, the uplink channel supporting at most 8-layer codebook-based uplink data transmission.

In step 508, the pre-coded uplink data channel is sent to the network device.

In the embodiments of the present disclosure, step 505 to step 508 may be realized by any of the embodiments of the present disclosure respectively, which is not limited and not described in detail in the embodiments of the present disclosure.

To sum up, the codebook configuration parameters are determined via the predefined antenna array configuration and according to the antenna array configuration; the precoding matrix set for the full coherent transmission is generated according to the codebook configuration parameters; at least one precoding matrix for the incoherent transmission and at least one precoding matrix for the partial coherent transmission are determined according to the antenna correlation classification of the terminal; the codebook set includes the at least one precoding matrix for the incoherent transmission and the at least one precoding matrix for the partial coherent transmission; the indication information sent by the network device is received; the corresponding precoding matrix is determined from the codebook set according to the indication information; the uplink channel is pre-coded by using the precoding matrix; the uplink channel supports at most 8-layer codebook-based uplink data transmission; and the pre-coded uplink data channel is sent to the network device. The codebook-based uplink transmission may realize a spatial multiplexing, thus effectively increasing an uplink channel transmission rate, and improving a communication efficiency.

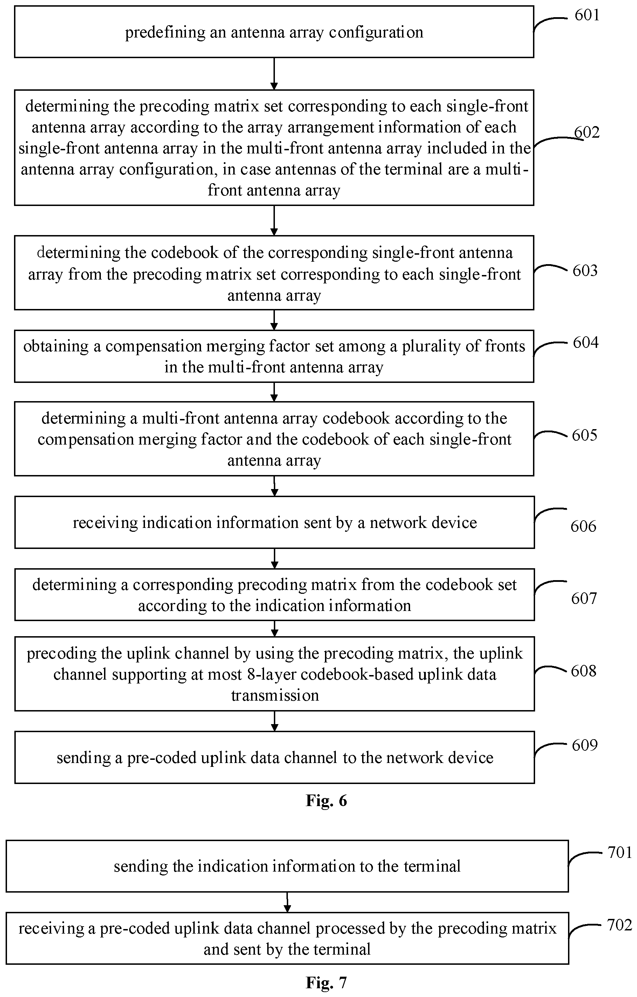

The embodiments of the present disclosure provide another codebook-based uplink channel transmission method. Fig. 6 is a flow chart of another codebook-based uplink channel transmission method provided by an embodiment of the present disclosure. The method can be performed by the terminal. The codebook-based uplink channel transmission method can be performed separately, or performed in conjunction with any of the embodiments in the present disclosure or possible realization modes in the embodiments, or performed in conjunction with any of the technical solutions in the relevant technologies. As shown in Fig. 6, the codebook-based uplink channel transmission method can include the following steps.

In step 601, an antenna array configuration is predefined.

In the embodiments of the present disclosure, the antennas of the terminal are a multi-front antenna array, and the antenna array configuration includes the array arrangement information of each single-front antenna array in the multi-front antenna array.

Similar to the embodiment shown in Fig. 3, the arrangement information of each single-front antenna array in the multi-front antenna array can indicate the way the multi-front antennas of the terminal are arranged, including the dimensions of the arrangement, the number of the antenna ports in each dimension, etc.

In step 602, antennas of the terminal are a multi-front antenna array, and the precoding matrix set corresponding to each single-front antenna array of the multi-front antenna array configuration is determined according to the array arrangement information of each single-front antenna array in the multi-front antenna array included in the antenna array configuration.

In the embodiments of the present disclosure, the precoding matrix set corresponding to each single-front antenna array can be determined according to the array arrangement information of the single-front antenna array of each front in the multi-front antenna array.

According to the antenna array of each front in the multi-front antenna array, the precoding matrix set corresponding to each single-front antenna array is determined in accordance with the method in the embodiment shown in Fig. 3, which is not illustrated here.

In step 603, the codebook of the corresponding single-front antenna array is determined from the precoding matrix set corresponding to each single-front antenna array.

In the embodiments of the present disclosure, the codebook of the corresponding single-front antenna array can be determined from the precoding matrix set corresponding to each single-front antenna array.

The codebook of the corresponding single-front antenna array is determined from the precoding matrix set corresponding to each single-front antenna array in accordance with the method in the embodiment shown in Fig. 3, which is not illustrated here.

In step 604, a compensation merging factor set among a plurality of fronts in the multi-front antenna array is obtained.

Considering that a placement interval of a plurality of fronts is related to an actual deployment scenario, for the multi-front antenna array, the plurality of fronts may not be evenly distributed, so it is necessary to obtain the compensation merging factor set among the fronts.

Optionally, the compensation merging factor may be indicated to the terminal by the network device, or determined by the terminal itself, or determined by the terminal and then sent to the network device.

In step 605, a multi-front antenna array codebook is determined according to the compensation merging factor and the codebook of each single-front antenna array.

As an example, taking four fronts as an example, the codebook structure is expressed as:

$$W = \begin{bmatrix} W_{panel}^1 & 0 & 0 & 0 \\ 0 & W_{panel}^2 & 0 & 0 \\ 0 & 0 & W_{panel}^3 & 0 \\ 0 & 0 & 0 & W_{panel}^4 \end{bmatrix} \cdot W_3, \ W_{panel}^i = W_1 \cdot W_2, i = 1, ..., 4,$$

$$W_3 = \begin{bmatrix} c_{panel}^1 & c_{panel}^2 & c_{panel}^3 & c_{panel}^4 \end{bmatrix}.$$

$W_{panel}^i$ represents the precoding of each front, which adopts the two-level structure of a single-front codebook. Considering the feedback cost, $W_1$ and $W_2$ of the plurality of fronts can be the same or different. $W_3$ represents the compensation merging factor among the plurality of fronts, in which $c_{panel}^i$, $i = 1, ..., 4$ is the compensation merging factor of the $i^{th}$ front, which can include the amplitude and phase.

In some embodiments of the present disclosure, the antennas of the terminal are a multi-front antenna array, and the codebook of the terminal may also be redesigned according to the arrangement of the multi-front antenna. For example, if each antenna front in the plurality of antenna fronts has been calibrated and the spacing between the fronts is not large, it can be equivalent to an array obtained by removing several rows and columns of antennas from a uniform antenna array.

In step 606, the indication information sent by the network device is received.

In step 607, the corresponding precoding matrix is determined from the codebook set according to the indication information.

In step 608, the uplink channel is pre-coded by using the precoding matrix, the uplink channel supporting at most 8-layer codebook-based uplink data transmission.

In step 609, the pre-coded uplink data channel is sent to the network device.

In the embodiments of the present disclosure, step 606 to step 609 may be realized by any of the embodiments of the present disclosure respectively, which is not limited and not described in detail in the embodiments of the present disclosure.

To sum up, the antennas of the terminal are a multi-front antenna array via the predefined antenna array configuration; the precoding matrix set corresponding to each single-front antenna array is determined according to the array arrangement information of each single-front antenna array in the multi-front antenna array included in the antenna array configuration; the codebook of the corresponding single-front antenna array is determined from the precoding matrix set corresponding to each single-front antenna array; the compensation merging factor which is set among a plurality of fronts in the multi-front antenna array is obtained; the multi-front antenna array codebook is determined according to the compensation merging factor and the codebook of each single-front antenna array; the indication information sent by the network device is received; the corresponding precoding matrix is determined from the codebook set according to the indication information; the uplink channel is pre-coded by using the precoding matrix; the uplink channel supports at most 8-layer codebook-based uplink data transmission; and the pre-coded uplink data channel is sent to the network device. The codebook-based uplink transmission may realize a spatial multiplexing, thus effectively increasing an uplink channel transmission rate, and improving a communication efficiency.

The embodiments of the present disclosure provide another codebook-based uplink channel transmission method. Fig. 7 is a flow chart of another codebook-based uplink channel transmission method provided by an embodiment of the present disclosure. The method can be performed by the network device. The codebook-based uplink channel transmission method can be performed separately, or performed in conjunction with any of the embodiments in the present disclosure or possible realization modes in the embodiments, or performed in conjunction with any of the technical solutions in the relevant technologies. As shown in Fig. 7, the codebook-based uplink channel transmission method can include the following steps.

In step 701, the indication information is sent to the terminal.

The indication information is configured to determine a corresponding precoding matrix from the codebook set matching the number of antenna ports of the terminal for an uplink channel transmission, the maximum number of antenna ports of the uplink channel is 8, and the uplink channel supports at most 8-layer codebook-based uplink data transmission.

In the embodiments of the present disclosure, the indication information may include a transmission precoding matrix indicator (TPMI) and/or a sounding reference signal (SRS) resource index (SRI).

Optionally, the terminal can determine the corresponding precoding matrix from the codebook set according to the TPMI sent by the network device, or determine the corresponding precoding matrix from the codebook set according to the TPMI and the SRI sent by the network device.

In the embodiments of the present disclosure, the codebook set includes at least one precoding matrix. The codebook set can be one of the following:

in at least one precoding matrix included in the codebook set, each precoding matrix has a same rank;
at least two precoding matrices included in the codebook set have at least two ranks;
a plurality of precoding matrices included in the codebook set have eight ranks.

That is, as a first possible embodiment, the rank of each precoding matrix in the codebook set is the same, and the precoding matrices of different ranks will be in different codebook sets.

As a second possible embodiment, a plurality of precoding matrices included in the codebook set have at least two ranks, and the precoding matrices of different ranks can be in a sane codebook set.

As a third possible embodiment, a plurality of precoding matrices included in the codebook set have eight ranks, that is, if the terminal is a terminal of 8 antenna ports of the uplink channel , the precoding matrices of ranks 1 to 8 all exist in the codebook set.

In some embodiments, the codebook set can be represented by one or more codebook tables.

As an example, in the first embodiment, different codebook sets of ranks 1 to 8 correspond to different codebook tables respectively. For example, a codebook set of rank 1 corresponds to table 1, a codebook set of rank 2 corresponds to table 2, and so on. In this example, the indication information can also include the transmission rank indicator (TRI), and the terminal determines the ranks according to the TRI and thus determines the table to be used.

In some embodiments, the indication information includes the TPMI. The terminal can determine the corresponding precoding matrix from the codebook set according to the TPMI.

In at least one precoding matrix included in the codebook set, each precoding matrix has the same rank. The indication information can indicate the TPMI, and the terminal can determine the precoding matrix corresponding to the TPMI from the codebook set according to the TPMI.

A plurality of precoding matrices included in the codebook set have at least two ranks, or a plurality of precoding matrices included in the codebook set have eight ranks. The indication information can indicate TPMI and RI. For example, the codebook set includes a precoding matrix of rank 1 and a precoding matrix of rank 2, in which index 0-m is a precoding matrix of rank 1 and index s-n is a precoding matrix of rank 2; and then the TPMI can indicate both the RI and the TPMI.

In some embodiments, the indication information includes the TPMI and the SRI. The terminal can determine the corresponding precoding matrix from the codebook set according to the TPMI and the SRI. The terminal can determine the transmission rank indicator (TRI) of the terminal according to the SRI, and then determine the corresponding precoding matrix from the codebook set according to the determined TRI and the TPMI.

In step 702, a pre-coded uplink data channel processed by the precoding matrix and sent by the terminal is received.

The terminal can pre-code the uplink channel by using the determined precoding matrix to complete the uplink channel transmission.

The terminal can map the pre-coded data to the corresponding antenna ports and send the pre-coded uplink data channel to the network device. The network device receives the uplink data channel pre-coded by the precoding matrix and sent by the terminal.

To sum up, by sending the indication information to the terminal, the uplink data channel pre-coded by the precoding matrix and sent by the terminal is received. The codebook-based uplink transmission may realize a spatial multiplexing, thus effectively increasing an uplink channel transmission rate, and improving a communication efficiency.

In the above embodiments provided in the present disclosure, the methods provided in the embodiments of the present disclosure are introduced respectively from the perspective of the network device and the terminal. In order to realize the functions of the method provided in the above embodiments of the present disclosure, the network device and the terminal may include a hardware structure and a software module, and realize the above functions in the form of the hardware structure, the software module or both of the hardware structure and the software module. One of the above functions can be executed by means of the hardware structure, the software module, or both of the hardware structure and the software module.

Corresponding to the codebook-based uplink channel transmission methods provided by the above embodiments, the present disclosure further provides a codebook-based uplink channel transmission apparatus. Since the codebook-based uplink channel transmission apparatus provided by the embodiments of the present disclosure correspond to the methods provided by the above embodiments, the embodiments of the codebook-based uplink channel transmission method are also applicable to the codebook-based uplink channel transmission apparatus provided in the embodiments, which will not be described in detail in the embodiments. Figs. 6-7 are flow charts of the codebook-based uplink channel transmission method provided according to the present disclosure.

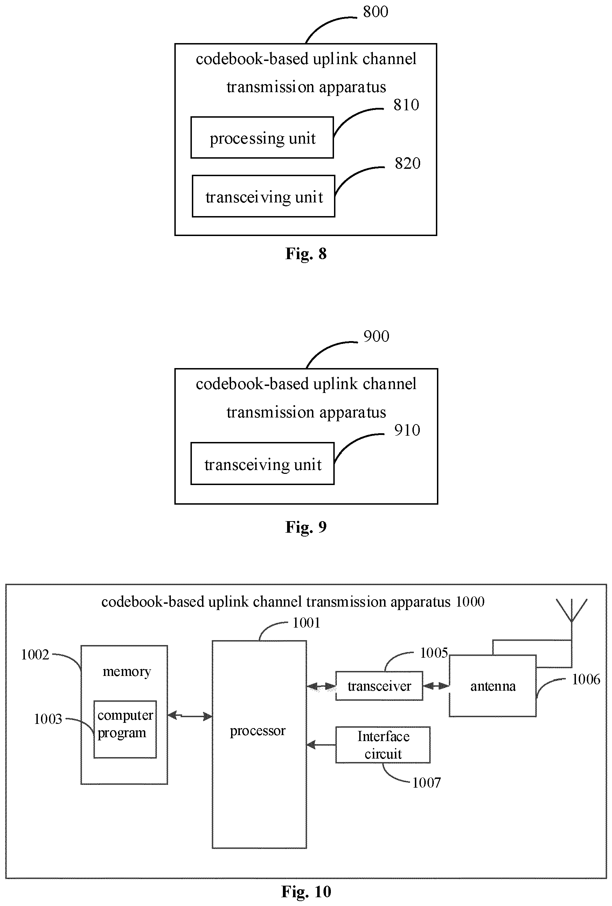

Fig. 8 is a structural schematic diagram of a codebook-based uplink channel transmission apparatus provided by the embodiment of the present disclosure, and the apparatus is applied to a terminal.

As shown in Fig. 8, the codebook-based uplink channel transmission apparatus 800 includes: a processing unit 810 and a transceiving unit 820.

The processing unit 810 is configured to determine a codebook set matching a number of antenna ports of the terminal for an uplink channel transmission.

The transceiving unit 820 is configured to receive indication information sent by a network device

the processing unit 810 is configured to determine a corresponding precoding matrix from the codebook set according to the indication information;

the processing unit 810 is configured to precode the uplink channel by using the precoding matrix;

the transceiving unit 820 is configured to send a pre-coded uplink data channel to the network device.

As an implementation mode of the embodiments of the present disclosure, the codebook set is one of the following.

The codebook set includes at least one precoding matrix, in which each precoding matrix has the same rank.

The codebook set includes at least two precoding matrices, in which the precoding matrices have at least two ranks.

The codebook set includes a plurality of precoding matrices, in which the precoding matrices have eight ranks.

As an implementation mode of the embodiments of the present disclosure, the indication information includes a transmission precoding matrix indicator (TPMI) and/or a sounding reference signal (SRS) resource index SRI.

As an implementation mode of the embodiments of the present disclosure, the processing unit 810 is specifically configured to:

predefine an antenna array configuration;
determine codebook configuration parameters according to the antenna array configuration;
generate a precoding matrix set for a full coherent transmission according to the codebook configuration parameters;
determine at least one precoding matrix from the precoding matrix set as a codeword for the full coherent transmission in the codebook.

As an implementation mode of the embodiments of the present disclosure, the codebook includes at least one precoding matrix for an incoherent transmission and at least one precoding matrix for a partial coherent transmission determined according to an antenna correlation classification of the terminal.

As an implementation mode of the embodiments of the present disclosure, antennas of the terminal are a single-front antenna array, and the antenna array configuration is configured to indicate array arrangement information of the single-front antenna array.

As an implementation mode of the embodiments of the present disclosure, antennas of the terminal are a multi-front antenna array, and the antenna array configuration is configured to indicate array arrangement information of the single-front antenna array obtained from a combination of multiple fronts of the multi-front antenna array.

As an implementation mode of the embodiments of the present disclosure, antennas of the terminal are a multi-front antenna array.

The antenna array configuration includes the array arrangement information of each single-front antenna array in the multi-front antenna array, in which the array arrangement information of each single-front antenna array is configured to determine a precoding matrix set corresponding to each single-front antenna array, and determine a codebook of each single-front antenna array from the precoding matrix set corresponding to each single-front antenna array.

As an implementation mode of the embodiments of the present disclosure, the processing unit 810 is also configured to:

> obtain a compensation merging factor set among a plurality of fronts in the multi-front antenna array;
> determine a multi-front antenna array codebook according to the compensation merging factor and the codebook of each single-front antenna array.

As an implementation mode of the embodiments of the present disclosure, the indication information includes a transmission precoding matrix indicator (TPMI) and a sounding reference signal (SRS) resource index SRI, and the determining a corresponding precoding matrix from the codebook set according to the indication information includes:

> determining a transmission rank indication (TRI) of the terminal according to the SRI;
> determining the pre-coding matrix according to the TRI and the TPMI.

As an implementation mode of the embodiments of the present disclosure, the processing unit 810 is specifically configured to:
generate the precoding matrix set for the full coherent transmission based on a constant modulus DFT vector according to the codebook configuration parameters.

In the apparatus of the embodiments of the present disclosure, a codebook set matching the number of antenna ports of the terminal for an uplink channel transmission is determined, and the maximum number of antenna ports of the uplink channel is 8; the indication information sent by the network device is received; and the corresponding precoding matrix is determined from the codebook set according to the indication information. The uplink channel is pre-coded by using the precoding matrix. The uplink channel supports at most 8-layer codebook-based uplink data transmission. The pre-coded uplink data channel is sent to the network device. The codebook-based uplink transmission may realize a spatial multiplexing, thus effectively increasing an uplink channel transmission rate, and improving a communication efficiency.

Fig. 9 is a structural schematic diagram of a codebook-based uplink channel transmission apparatus provided by the present disclosure, and the apparatus is applied to a network device.

As shown in Fig. 9, the codebook-based uplink channel transmission apparatus 900 includes: a transceiving unit 910.

The transceiving unit 910 is configured to send indication information to a terminal.

The indication information is configured to determine a corresponding precoding matrix from a codebook set matching a number of antenna ports of the terminal for an uplink channel transmission, a maximum number of antenna ports of the uplink channel is 8, and the uplink channel supports at most 8-layer codebook-based uplink data transmission.

The receiving and sending unit 910 is configured to receive a pre-coded uplink data channel processed by the precoding matrix and sent by the terminal.

As an implementation mode of the embodiments of the present disclosure, the codebook set is one of the following.

The codebook set includes at least one precoding matrix, in which each precoding matrix has a same rank.

The codebook set includes at least two precoding matrices, in which the precoding matrices have at least two ranks.

The codebook set includes a plurality of precoding matrices, in which the precoding matrices have eight ranks.

As an implementation mode of the embodiments of the present disclosure, the indication information includes a transmission precoding matrix indicator (TPMI) and/or a sounding reference signal (SRS) resource index SRI.

As an implementation mode of the embodiments of the present disclosure, the indication information includes a transmission precoding matrix indicator (TPMI) and a sounding reference signal (SRS) resource index SRI, in which the SRI is configured to determine a transmission rank indication (TRI) of the terminal, and the TRI and the TPMI are configured to determine the precoding matrix.

In the apparatus in the embodiments of the present disclosure, by sending the indication information to the terminal, the pre-coded uplink data channel processed by the precoding matrix and sent by the terminal, sent by the terminal is received. The codebook-based uplink transmission may realize a spatial multiplexing, thus effectively increasing an uplink channel transmission rate, and improving a communication efficiency.

Referring to Fig. 10, which is a structural schematic diagram of a codebook-based uplink channel transmission apparatus provided by the present disclosure. The codebook-based uplink channel transmission apparatus 1000 may be a network device; a terminal; a chip, a chip system, or a processor that supports the network device to achieve the above method; or a chip, a chip system, or a processor that supports the terminal to achieve the above method. The apparatus can be configured to implement the method described in the above method embodiments, which can be found by reference to the description in the above method embodiments.

The codebook-based uplink channel transmission apparatus 1000 may include one or more processors 1001. The processor 1001 can be a general processor or a special processor. For example, the processor may be a baseband processor or a central processing unit. The baseband processor can be configured to process a communication protocol and communication data, and the central processing unit can be configured to control the codebook-based uplink channel transmission apparatus (such as a base station, a baseband chip, a terminal, a terminal chip, DU or CU, etc.), execute computer programs and process the data of the computer programs.

Optionally, the codebook-based uplink channel transmission apparatus 1000 may also include one or more memories 1002 on which a computer program 1003 may be stored; and a processor 1001 executes the computer program 1003 so that the codebook-based uplink channel transmission apparatus 1000 executes the method described in the above method embodiments. The computer program 1003 may be solidified in the processor 1001, in which case the processor 1001 may be implemented by hardware.

Optionally, data can also be stored in the memory 1002. The codebook-based uplink channel transmission apparatus 1000 and the memory 1002 can be arranged separately or integrated together.

Optionally, the codebook-based uplink channel transmission apparatus 1000 may also include a transceiver 1005 and an antenna 1006. The transceiver 1005 may be called a transceiving unit, a transceiving machine or a transceiving circuit, etc., for realizing transceiving functions. The transceiver 1005 may include a receiver and a transmitter. The receiver may be called a receiving machine or a receiving circuit, etc., for realizing the receiving function. The transmitter can be called a transmitting machine or a transmitting circuit, etc., for realizing the transmitting function.

Optionally, the codebook-based uplink channel transmission apparatus 1000 may also include one or more interface circuits 1007. The interface circuit 1007 is configured to receive code instructions and transmitting them to the processor 1001. The processor 1001 runs the code instructions to enable the codebook-based uplink channel transmission apparatus 1000 to execute the method described in the above method embodiments.

In one implementation mode, the processor 1001 may include a transceiver for realizing the transceiving functions. For example, the transceiver can be a transceiving circuit, or an interface, or an interface circuit. The transceiving circuit, the interface, or the interface circuit configured to realize the transceiving functions may be separate or integrated together. The above transceiving circuit, the interface or the interface circuit may be configured to read and write codes/data, or the above transceiving circuit, the interface or the interface circuit may be used for transmission or transfer of signals.

In one implementation mode, the codebook-based uplink channel transmission apparatus 1000 may include a circuit that can achieve the function of transmitting or receiving or communication in the above method embodiments. The processor and the transceiver described in the present disclosure can be achieved on an integrated circuit (IC), an analog IC, an RF integrated circuit (RFIC), a mixed-signal IC, an application specific integrated circuit (ASIC), a printed circuit board (PCB), an electronic device, etc. The processor and the transceiver can also be manufactured by various IC process technologies, such as complementary metal oxide semiconductor (CMOS), an nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The codebook-based uplink channel transmission apparatus described in the above embodiments may be a network device or a terminal, but the scope of the codebook-based uplink channel transmission apparatus described in the present disclosure is not limited to this, and the structure of the codebook-based uplink channel transmission apparatus may not be limited by the Figs. 8-9. The codebook-based uplink channel transmission apparatus can be an independent device or part of a larger device. For example, the codebook-based uplink channel transmission apparatus may be:

(1) an independent integrated circuit (IC), or a chip, or a system on chip or a subsystem;
(2) a set having one or more ICs, and optionally, the IC set may also include storage components for storing data and computer programs;

(3) an ASIC, such as a modem;

(4) a module that can be embedded in other devices;

(5) a receiver, a terminal, an intelligent terminal, a cellular phone, a wireless device, a handheld phone, a mobile unit, a vehicle device, a network device, a cloud device, artificial intelligence equipment, etc.;

(6) others, etc.

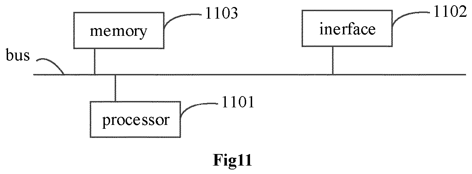

The case that the codebook-based uplink channel transmission apparatus can be a chip or a system on chip can be found by reference to the structural schematic diagram of the chip shown in Fig. 11. The chip shown in Fig. 11 includes a processor 1101 and an interface 1102, in which the number of the processors 1101 can be one or more, and the number of the interfaces 1102 can be multiple.

For the case that the chip is configured to implement the functions of the network device in the embodiments of the present disclosure:

the interface 1102 is configured to receive code instructions and transmitting to the processor;

the processor 1101 is configured to run the code instructions to execute the methods shown in Figs. 2, 3, 5 and 6.

For the case that the chip is configured to implement the functions of the terminal in the embodiments of the present disclosure:

the interface 1102 is configured to receive code instructions and transmitting to the processor;

the processor 1101 is configured to run the code instructions to execute the method shown in Fig. 7.

Optionally, the chip further includes a memory 1103 which is used to store necessary computer programs and data.

Those skilled in the art may also understand that various illustrative logical blocks and steps listed in the embodiments of the present disclosure may be achieved by electronic hardware, computer software, or a combination of both. Whether the function is achieved by hardware or software depends on the specific application and the design requirements of the overall system. Those skilled in the art may use various methods to achieve the function for each specific application, but such achieving shall not be understood as going beyond the protection scope of the embodiments of the present disclosure.

The embodiments of the present disclosure further provide a communication system. The system includes the above codebook-based uplink channel transmission apparatus as the terminal and the codebook-based uplink channel transmission apparatus as the network device in the embodiments shown in Figs. 8-9, or, the system includes the above codebook-based uplink channel transmission apparatus as the terminal and the codebook-based uplink channel transmission apparatus as the network device in the embodiment shown in Fig. 10.

The present disclosure further provides a computer-readable storage medium having instructions stored thereon, and the instructions, when executed by a computer, realize the function in any one of the above-mentioned method embodiments.

The present disclosure further provides a computer program product which, when executed by a computer, realizes the function in any one of the above-mentioned method embodiments.

The above-mentioned embodiments can be entirely or partially realized through software, hardware, firmware or any combinations thereof. When realized by using the software, the embodiments can be entirely or partially realized in a form of a computer program product. The computer program product includes one or more computer programs. When the computer programs are loaded and executed on a computer, processes or functions based on the embodiments of the present disclosure are entirely or partially generated. The computer can be a general-purpose computer, a special-purpose computer, a computer network, or other programmable apparatuses. The computer programs can be stored in a computer-readable storage medium, or transmitted from one computer-readable storage medium to another computer-readable storage medium, for example, the computer programs can be transmitted from one website, computer, server or data center to another website, computer, server or data center in a wired (such as a coaxial cable, an optical fiber, and a digital subscriber line (DSL)) or wireless (such as infrared, wireless, and microwave) manner. The computer-readable storage medium can be any available medium that can be accessed by the computer or an integrated data storage device such as a server and a data center including one or more available media. The available medium can be a magnetic medium (such as floppy disk, a hard disk, and a cassette), an optical medium (such as a high-density digital video disc (DVD)), or a semiconductor medium (such as a solid state disk (SSD)), etc.

It can be understood by those of ordinary skilled in the art that various digital numbers such as first and second involved in the present disclosure are only for distinguishing for facilitating description, are not intended to limit the scope of the embodiments of the present disclosure, but also denote a chronological order.

At least one in the present disclosure can be described as one or more, a plurality of can be two, three, four or more, which is not limited in the present disclosure. In the embodiments of the present disclosure, for a technical feature, technical features in such a technical feature are distinguished by "first", "second", "third", "A", "B", "C", "D", etc., and there are no chronological or size order among the technical features described by the "first", "second", "third", "A", "B", "C", and "D".

A corresponding relationship shown in each table in the present disclosure can be configured or predefined. A value of information in each table is only exampled, and other values can be configured, which is not limited in the present disclosure. When a corresponding relationship between the information and each parameter is configured, it is not necessarily required to configure all corresponding relationships shown in each table. For example, in the tables in the present disclosure, it is also possible that corresponding relationships shown in certain lines are not configured. For another example, appropriate deformation adjustment, such as splitting and merging, can be made based on the above-mentioned tables. Names of parameters shown in titles in each of the above-mentioned tables can also adopt other names that can be understood by the communication apparatus, and the values or expressions of the parameters thereof can also adopt other values or expressions that can be understood by the communication apparatus. During implementation, each of the above-mentioned tables can also adopt other data structures, such as arrays, queues, containers, stacks, linear tables, pointers, linked lists, trees, graphs, structures, classes, heaps, and hash tables or Hash tables.

Pre-definition in the present disclosure can be understood as definition, preliminary definition, storage, pre-storage, pre-negotiation, pre-configuration, solidification, or pre-burning.

Those of ordinary skill in the art can realize that units and algorithm steps in all examples described in conjunction with the embodiments disclosed in the present disclosure can be realized by electronic hardware, computer software or a combination of both. Whether these functions are realized by hardware or software depends on specific applications and design constraints of technical solutions. The skilled in the art can adopt different methods to realize the described functions in each specific application, which, however, should be considered as falling within the scope of the present disclosure.

It can be clearly known by the skilled in the art that, for facilitating and simplifying the description, specific working processes of the above-mentioned system, apparatus and unit can refer to corresponding processes in the above-mentioned method embodiments so as to be no longer repeated herein.

It should be understood that the steps can be reordered, added or deleted by using various forms of processes shown above. For example, the steps recorded in the embodiments of the present disclosure may be executed in parallel, sequentially or in different orders, as long as the desired results of the technical solutions disclosed in the present invention can be achieved. There is no limitation herein.

The above specific embodiments do not limit the protection scope of the present invention. It should be understood by those skilled in the art that various modifications, combinations, subcombinations and substitutions may be made according to the design requirements and other factors. Any modification, equivalent replacement, improvement, etc. made within the spirit and the principle of the present invention shall be included within the protection scope of the present invention.

**Claims**

1. A codebook-based uplink channel transmission method, performed by a terminal, comprising:

    determining a codebook set matching a number of antenna ports of the terminal for an uplink channel transmission, wherein a maximum number of antenna ports of the uplink channel is 8;
    receiving indication information sent by a network device;
    determining a corresponding precoding matrix from the codebook set according to the indication information;
    precoding the uplink channel by using the precoding matrix, the uplink channel supporting at most 8-layer codebook-based uplink data transmission; and
    sending a pre-coded uplink data channel to the network device.

2. The method according to claim 1, wherein the codebook set is one of the following:

    the codebook set comprising at least one precoding matrix, wherein each precoding matrix has a same rank;
    the codebook set comprising at least two precoding matrices, wherein the at least two precoding matrices have at least two ranks; or
    the codebook set comprising a plurality of precoding matrices, wherein the plurality of precoding matrices have eight ranks.

3. The method according to claim 1, wherein the indication information comprises a transmission precoding matrix indicator (TPMI) and/or a sounding reference signal resource index (SRI).

4. The method according to claim 1, wherein determining the codebook of the terminal comprises:

    predefining an antenna array configuration;
    determining codebook configuration parameters according to the antenna array configuration;
    generating a precoding matrix set for a full coherent transmission according to the codebook configuration parameters; and
    determining at least one precoding matrix from the precoding matrix set as a codeword for the full coherent transmission in the codebook.

5. The method according to claim 1 or 4, wherein the codebook further comprises at least one precoding matrix for an incoherent transmission and at least one precoding matrix for a partial coherent transmission determined according to an antenna correlation classification of the terminal.

6. The method according to claim 4, wherein antennas of the terminal are a single-front antenna array, and the antenna array configuration is configured to indicate array arrangement information of the single-front antenna array.

7. The method according to claim 4, wherein antennas of the terminal are a multi-front antenna array, and the antenna array configuration is configured to indicate array arrangement information of a single-front antenna array obtained from a combination of multiple fronts of the multi-front antenna array.

8. The method according to claim 4, wherein antennas of the terminal are a multi-front antenna array;
the antenna array configuration comprises array arrangement information of each single-front antenna array in the multi-front antenna array, wherein the array arrangement information of each single-front antenna array is configured to determine a precoding matrix set corresponding to each single-front antenna array, and determine a codebook of each single-front antenna array from the precoding matrix set corresponding to each single-front antenna array.

9. The method according to claim 8, further comprising:

    obtaining a compensation merging factor set among a plurality of fronts in the multi-front antenna array; and
    determining a multi-front antenna array codebook according to the compensation merging factor and the codebook of each single-front antenna array.

10. The method according to claim 3, wherein the indication information comprises the transmission precoding matrix indicator (TPMI) and the sounding reference signal resource index (SRI), and determining a corresponding precoding matrix from the codebook set according to the indication information comprises:

    determining a transmission rank indication (TRI) of the terminal according to the SRI; and
    determining the precoding matrix according to the TRI and the TPMI.

11. The method according to claim 4, wherein generating a precoding matrix set for a full coherent transmission according to the codebook configuration parameters comprises:
generating the precoding matrix set for the full coherent transmission based on a constant modulus DFT vector according to the codebook configuration parameters.

12. A codebook-based uplink channel transmission method, performed by a network device, comprising:

    sending indication information to a terminal;
    wherein the indication information is configured to determine a corresponding precoding matrix from a codebook set matching a number of antenna ports of the terminal for an uplink channel transmission, wherein a maximum number of antenna ports of the uplink channel is 8, and the uplink channel supports at most 8-layer codebook-based uplink data transmission; and
    receiving a pre-coded uplink data channel processed by the precoding matrix and sent by the terminal.

13. The method according to claim 11, wherein the codebook set is one of the following:

the codebook set comprising at least one precoding matrix, wherein each precoding matrix has a same rank;

the codebook set comprising at least two precoding matrices, wherein the at least two precoding matrices have at least two ranks; or

the codebook set comprising a plurality of precoding matrices, wherein the plurality of precoding matrices have eight ranks.

14. The method according to claim 11, wherein the indication information comprises a transmission precoding matrix indicator (TPMI) and/or a sounding reference signal resource index (SRI).

15. The method according to claim 13, wherein the indication information comprises a transmission precoding matrix indicator (TPMI) and a sounding reference signal resource index (SRI), wherein the SRI is configured to determine a transmission rank indication (TRI) of the terminal, and the TRI and the TPMI are configured to determine the precoding matrix.

16. A codebook-based uplink channel transmission apparatus, applied to a terminal, comprising:

a processing unit configured to determine a codebook set matching a number of antenna ports of the terminal for an uplink channel transmission, wherein a maximum number of antenna ports of the uplink channel is 8;

a transceiving unit configured to receive indication information sent by a network device;

wherein the processing unit is configured to determine a corresponding precoding matrix from the codebook set according to the indication information;

the processing unit is configured to precode the uplink channel by using the precoding matrix and the uplink channel supports at most 8-layer codebook-based uplink data transmission; and

the transceiving unit is configured to send a pre-coded uplink data channel to the network device.

17. A codebook-based uplink channel transmission apparatus, applied to a network device, comprising:

a transceiving unit configured to send indication information to a terminal;

wherein the indication information is configured to determine a corresponding precoding matrix from a codebook set matching a number of antenna ports of the terminal for an uplink channel transmission, a maximum number of antenna ports of the uplink channel is 8, and the uplink channel supports at most 8-layer codebook-based uplink data transmission;

wherein the transceiving unit is configured to receive a pre-coded uplink data channel processed by the precoding matrix and sent by the terminal.

18. A computer-readable storage medium, configured to store instructions, wherein when the instructions are executed, the method according to any one of claims 1-10 is implemented.

19. A computer-readable storage medium, configured to store instructions, wherein when the instructions are executed, the method according to any one of claims 11-14 is implemented.

cmmunication system

101                    102

| network device | | terminal device |

Fig. 1

determining a codebook set matching the a number of antenna ports of the terminal for an uplink channel transmission, the a maximum number of antenna ports of the uplink channel is 8 — 201

receiving indication information sent by a network device — 202

determining a corresponding precoding matrix from the codebook set according to the indication information — 203

precoding the uplink channel by using the precoding matrix, the uplink channel supporting at most 8-layer codebook-based uplink data transmission — 204

sending a pre-coded uplink data channel to the network device — 205

Fig. 2

| | |
|---|---|
| predefining an antenna array configuration | 301 |

↓

| | |
|---|---|
| determining codebook configuration parameters according to the antenna array configuration | 302 |

↓

| | |
|---|---|
| generating a precoding matrix set for a full coherent transmission according to the codebook configuration parameters | 303 |

↓

| | |
|---|---|
| determining at least one precoding matrix from the precoding matrix set as a codeword for the full coherent transmission in the codebook | 304 |

↓

| | |
|---|---|
| receiving indication information sent by a network device | 305 |

↓

| | |
|---|---|
| determining a corresponding precoding matrix from the codebook set according to the indication information | 306 |

↓

| | |
|---|---|
| precoding the uplink channel by using the precoding matrix, the uplink channel supporting at most 8-layer codebook-based uplink data transmission | 307 |

↓

| | |
|---|---|
| sending a pre-coded uplink data channel to the network device | 308 |

**Fig. 3**

1   9   3   11   5   13   7   15

0   8   2   10   4   12   6   14

**Fig. 4a**

**Fig. 4b**

**Fig. 4c**

beam group $(i_{1,1}, i_{1,2}) = (0,0)$

beam group $(i_{1,1}, i_{1,2}) = (1,0)$

beam group $(i_{1,1}, i_{1,2}) = (0,1)$

second dimension

beam in $X_2$

beam in $X_1$

first dimension

**Fig. 4d**

predefining an antenna array configuration — 501

determining codebook configuration parameters according to the antenna array configuration — 502

generating a precoding matrix set for a full coherent transmission according to the codebook configuration parameters — 503

determining at least one precoding matrix for an incoherent transmission and at least one precoding matrix for a partial coherent transmission according to an antenna correlation classification of the terminal, the codebook set including the at least one precoding matrix for the incoherent transmission and the at least one precoding matrix for the partial coherent transmission — 504

receiving indication information sent by a network device — 505

determining a corresponding precoding matrix from the codebook set according to the indication information — 506

precoding the uplink channel by using the precoding matrix, the uplink channel supporting at most 8-layer codebook-based uplink data transmission — 507

sending a pre-coded uplink data channel to the network device — 508

**Fig. 5**

predefining an antenna array configuration ⌐ 601

determining the precoding matrix set corresponding to each single-front antenna array according to the array arrangement information of each single-front antenna array in the multi-front antenna array included in the antenna array configuration, in case antennas of the terminal are a multi-front antenna array ⌐ 602

determining the codebook of the corresponding single-front antenna array from the precoding matrix set corresponding to each single-front antenna array ⌐ 603

obtaining a compensation merging factor set among a plurality of fronts in the multi-front antenna array ⌐ 604

determining a multi-front antenna array codebook according to the compensation merging factor and the codebook of each single-front antenna array ⌐ 605

receiving indication information sent by a network device ⌐ 606

determining a corresponding precoding matrix from the codebook set according to the indication information ⌐ 607

precoding the uplink channel by using the precoding matrix, the uplink channel supporting at most 8-layer codebook-based uplink data transmission ⌐ 608

sending a pre-coded uplink data channel to the network device ⌐ 609

**Fig. 6**

sending the indication information to the terminal ⌐ 701

receiving a pre-coded uplink data channel processed by the precoding matrix and sent by the terminal ⌐ 702

**Fig. 7**

800

codebook-based uplink channel
transmission apparatus

processing unit — 810

transceiving unit — 820

**Fig. 8**

900

codebook-based uplink channel
transmission apparatus

transceiving unit — 910

**Fig. 9**

codebook-based uplink channel transmission apparatus 1000

— 1001

1002 — memory

1003 — computer program

processor

transceiver — 1005

antenna

1006

Interface circuit — 1007

**Fig. 10**

**Fig11**

## INTERNATIONAL SEARCH REPORT

International application No.

**PCT/CN2022/084655**

### A.    CLASSIFICATION OF SUBJECT MATTER

H04B 7/0456(2017.01)i;   H04L 27/32(2006.01)i

According to International Patent Classification (IPC) or to both national classification and IPC

### B.    FIELDS SEARCHED

Minimum documentation searched (classification system followed by classification symbols)

H04B; H04L

Documentation searched other than minimum documentation to the extent that such documents are included in the fields searched

Electronic data base consulted during the international search (name of data base and, where practicable, search terms used)

WPABSC; CNTXT; ENTXTC; ENTXT; VEN; DWPI; 3GPP: 新空口, 天线, 端口, 上行, 码本, 集合, 预编码, 矩阵, 秩, 指示, new, radio, NR, antenna, port, uplink, UL, codebook, set, pre-coding, matrix, rank, TPMI

### C.    DOCUMENTS CONSIDERED TO BE RELEVANT

| Category* | Citation of document, with indication, where appropriate, of the relevant passages | Relevant to claim No. |
|---|---|---|
| X | WO 2022002079 A1 (HUAWEI TECHNOLOGIES CO., LTD.) 06 January 2022 (2022-01-06) <br> description, paragraphs [0006]-[0090] and [0124]-[0294] | 1-19 |
| A | US 2012320862 A1 (KO, H. S. et al.) 20 December 2012 (2012-12-20) <br> entire document | 1-19 |
| A | CN 108631831 A (HUAWEI TECHNOLOGIES CO., LTD.) 09 October 2018 (2018-10-09) <br> entire document | 1-19 |
| A | CN 108400804 A (CHINA ACADEMY OF TELECOMMUNICATIONS TECHNOLOGY) 14 August 2018 (2018-08-14) <br> entire document | 1-19 |
| A | CN 112690031 A (LENOVO (BEIJING) CO., LTD.) 20 April 2021 (2021-04-20) <br> entire document | 1-19 |

☐ Further documents are listed in the continuation of Box C.          ☑ See patent family annex.

| | |
|---|---|
| *    Special categories of cited documents: <br> "A"  document defining the general state of the art which is not considered to be of particular relevance <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search | Date of mailing of the international search report |
|---|---|
| **01 November 2022** | **04 January 2023** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

| International application No.<br>**PCT/CN2022/084655** |
|---|

| Patent document<br>cited in search report | | | Publication date<br>(day/month/year) | Patent family member(s) | | | Publication date<br>(day/month/year) |
|---|---|---|---|---|---|---|---|
| WO | 2022002079 | A1 | 06 January 2022 | CN | 113938169 | A | 14 January 2022 |
| US | 2012320862 | A1 | 20 December 2012 | WO | 2011122830 | A2 | 06 October 2011 |
| | | | | EP | 2555444 | A2 | 06 February 2013 |
| | | | | KR | 20110109992 | A | 06 October 2011 |
| | | | | WO | 2011122830 | A3 | 02 February 2012 |
| | | | | US | 8953540 | B2 | 10 February 2015 |
| | | | | EP | 2555444 | A4 | 03 June 2015 |
| | | | | CN | 104935368 | A | 23 September 2015 |
| | | | | EP | 2555444 | B1 | 08 March 2017 |
| | | | | CN | 104935368 | B | 24 July 2018 |
| CN | 108631831 | A | 09 October 2018 | BR | 112019019827 | A2 | 22 April 2020 |
| | | | | CN | 113965231 | A | 21 January 2022 |
| | | | | EP | 3605863 | A1 | 05 February 2020 |
| | | | | US | 2020036425 | A1 | 30 January 2020 |
| | | | | WO | 2018171786 | A1 | 27 September 2018 |
| | | | | IN | 201937042695 | A | 06 December 2019 |
| | | | | EP | 3605863 | A4 | 25 March 2020 |
| | | | | CN | 108631831 | B | 26 October 2021 |
| | | | | US | 11277188 | B2 | 15 March 2022 |
| CN | 108400804 | A | 14 August 2018 | CN | 108400804 | B | 09 July 2021 |
| CN | 112690031 | A | 20 April 2021 | WO | 2020073289 | A1 | 16 April 2020 |
| | | | | EP | 3864913 | A1 | 18 August 2021 |
| | | | | EP | 3864913 | A4 | 08 June 2022 |
| | | | | US | 2022038158 | A1 | 03 February 2022 |

Form PCT/ISA/210 (patent family annex) (January 2015)